# EUROPEAN PATENT APPLICATION

(11) **EP 2 241 459 A1**
(43) Date of publication of application: **20.10.2010**
(21) Application number: 09707673.1
(22) Date of filing: 05.02.2009
(51) Int. Cl.: B60G 7/00, F16C 7/00

(54) **LINK PART FOR VEHICLE**

(30) Priority: 05.02.2008 JP 2008025130
(71) Applicant: Showa Denko K.K., Tokyo 105-8518 (JP)
(72) Inventor: KAWATA, Naoyuki, Oyama-shi Tochigi 323-8678 (JP); KOKUBO, Sadao, Oyama-shi Tochigi 323-8678 (JP)
(74) Representative: Viering, Hans-Martin
(86) International application number: PCT/JP2009/051948
(87) International publication number: WO 2009/099135

(57) **Abstract**

The present invention relates to a link member for a vehicle having bracket portions at both ends and an intermediate connecting both bracket portions and arranged at an intermediate portion. The link member for a vehicle is constituted by an integrally formed product formed by deforming a pipe-shaped workpiece W1 by plastic working. The intermediate connecting portion is provided with an intermediate shaft portion 3 having a diameter smaller that that of the bracket portion 2, and a thickness of a peripheral wall of the bracket portion 2 is different from that of a peripheral wall of the intermediate shaft portion 3. This increases strength and durability of the link member.

## Description

### TECHNICAL FIELD

The present invention relates to a link member for a vehicle suitably used as an automobile underbody member, such as, e.g., a suspension arm, and its related technologies.

### TECHNICAL BACKGROUND

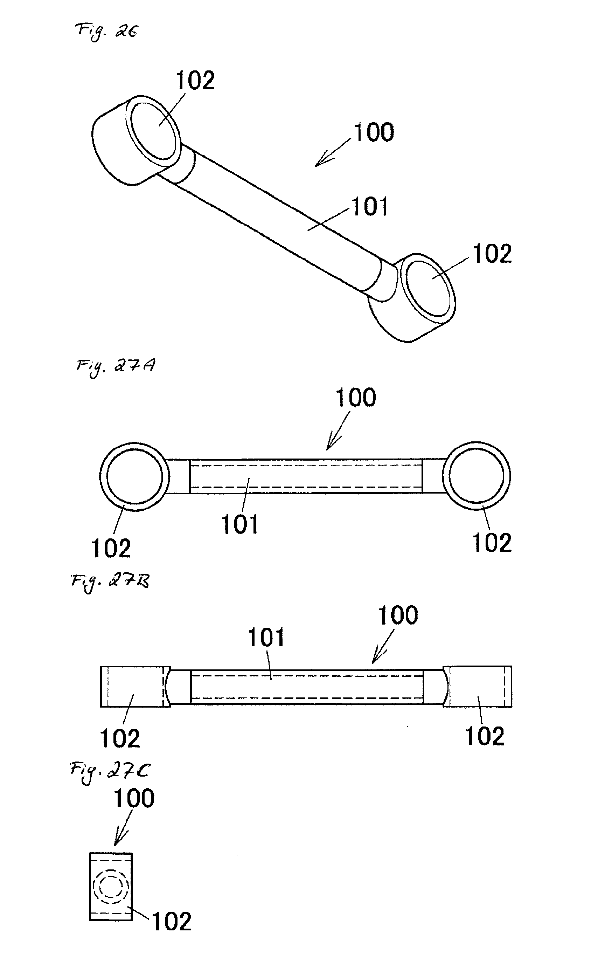

As shown in Fig. 26 and Figs. 27A to 27C, a suspension arm 100 for a vehicle is constituted by three members including two brackets 102 and 102 arranged at both ends and a connection shaft 101 connecting both the brackets 102 and 102. These three members 101, 102 and 102 are originally separate members, and formed into a suspension arm 100 by being connected by welding, such as, e.g., fusion joining and solid-state joining (Patent Documents 1 and 2).
Patent Document 1: Japanese Unexamined Laid-opened Patent Application Publication No. 10-181325 (see claims, Fig. 3)
Patent Document 2: Japanese Utility Model Application Publication No. 4-109608 (see claims).

### DISCLOSURE OF THE INVENTION

### PROBLEMS TO BE SOLVED BY THE INVENTION

A conventional link member for a vehicle such as a suspension arm, as shown in the aforementioned Patent Documents 1 and 2, has certain strength and durability. However, in a member especially related to a vehicle such as an automobile, it is now required to further improve the strength and durability as much as possible.

The preferred embodiments of the present invention have been developed in view of the above-mentioned and/or other problems in the related art. The preferred embodiments of the present invention can significantly improve upon existing methods and/or apparatuses.

The present invention was made in view of the aforementioned problems, and aims to provide a link member for a vehicle further improved in strength and durability, and its related technologies.

Other objects and advantages of the present invention will be explained in the following preferred embodiments.

### MEANS FOR SOLVING THE PROBLEMS

The present invention has the following structure to achieve the aforementioned objects.

[1] A link member for a vehicle having bracket portions at both ends of the link member and an intermediate connecting portion connecting the bracket portions and arranged at an intermediate portion of the link member, wherein
the link member is constituted by an integrally formed product obtained by deforming a pipe-shaped workpiece by plastic working;
the intermediate connecting portion is provided with an intermediate shaft portion having a diameter smaller than that of the bracket portion; and
a peripheral wall of the bracket portion is formed to have a thickness different from that of a peripheral wall of the intermediate shaft portion.

In the present invention, the plastic working means a mechanical working for deforming a cross-sectional shape of an originally integral one piece of material (workpiece) by plastic deformation.

[2] The link member for a vehicle as recited in the aforementioned Item 1, wherein the peripheral wall of the bracket portion is larger in thickness than the peripheral wall of the intermediate shaft portion.

[3] The link member for a vehicle as recited in the aforementioned Item 1 or 2, wherein as the plastic working, die-less processing for deforming a cross-sectional shape of the workpiece by applying tension or compressing force to the workpiece in an axial direction thereof is employed.

[4] The link member for a vehicle as recited in the aforementioned Item 3, wherein the die-less processing is a method of deforming the workpiece so as to decrease or increase a diameter and a thickness of the workpiece by applying tension or compressing force to the workpiece in the axial direction thereof.

[5] The link member for a vehicle as recited in the aforementioned Item 1 or 2, wherein as the plastic working, upset forging processing for deforming the workpiece so as to increase a diameter and a thickness of the workpiece by applying compressing force to the workpiece in an axial direction thereof is employed.

[6] The link member for a vehicle as recited in any one of the aforementioned Items 1 to 5, wherein a shape transitional portion in which a cross-sectional shape smoothly changes from a cross-sectional shape of the bracket portion to a cross-sectional shape of the intermediate shaft portion is provided between the bracket portion and the intermediate shaft portion.

[7] The link member for a vehicle as recited in the aforementioned Item 6, wherein the shape transitional portion is formed so that a diameter thereof changes smoothly.

[8] The link member for a vehicle as recited in the aforementioned Item 6 or 7, wherein the shape transitional portion is formed so that a thickness of a peripheral wall thereof changes smoothly.

[9] The link member for a vehicle as recited in any one of the aforementioned Items 1 to 8, wherein the intermediate connecting portion is provided with an intermediate large-diameter portion having a diameter larger than that of the intermediate shaft portion and a wall thickness of a peripheral wall different from that of the intermediate shaft portion.

[10] The link member for a vehicle as recited in any one of the aforementioned Items 1 to 9, wherein the link member is made of aluminum or aluminum alloy.

[11] The link member for a vehicle as recited in any one of the aforementioned Items 1 to 10, wherein the workpiece is an extruded product.

[12] The link member for a vehicle as recited in any one of the aforementioned Items 1 to 11, wherein at least one of the bracket portions arranged at both ends is provided with a bush mounting hole for mounting a bush, and constitutes a bush mounting portion.

[13] The link member for a vehicle as recited in any one of the aforementioned Items 1 to 12, wherein at least one of the bracket portions arranged at both ends constitutes a yoke portion having shaft supporting side walls.

[14] The link member for a vehicle as recited in any one of the aforementioned Items 1 to 13, wherein the intermediate shaft portion is provided with a through-hole.

[15] A suspension arm constituted by the link member for a vehicle as recited in any one of the aforementioned Items 1 to 14.

[16] A method of manufacturing a link member for a vehicle having bracket portions at both ends of the link member and an intermediate connecting portion connecting the bracket portions and arranged at an intermediate portion of the link member, wherein
a pipe-shaped workpiece is deformed by plastic working to thereby manufacture the link member for a vehicle in which an intermediate connecting portion is provided with an intermediate shaft portion having a diameter smaller than that of the bracket portion, a peripheral wall of the bracket portion is formed to have a thickness different from that of a peripheral wall of the intermediate shaft portion, and the link member is constituted by an integrally formed product.

[17] A method of manufacturing a suspension arm for an automobile having bracket portions at both ends of the suspension member and an intermediate connecting portion connecting the bracket portions and arranged at an intermediate portion of the suspension member, wherein
a pipe-shaped workpiece is deformed by plastic working to thereby manufacture the suspension arm for an automobile in which an intermediate connecting portion is provided with an intermediate shaft portion having a diameter smaller than that of the bracket portion, a peripheral wall of the bracket portion is formed to have a thickness different from that of a peripheral wall of the intermediate shaft portion, and the link member is constituted by an integrally formed product.

### EFFECTS OF THE INVENTION

According to the link member for a vehicle of the invention [1], since the link member is constituted by an integrally formed product, sufficient connecting strength can be secured between the portions, which improves the strength and durability.

According to the link member for a vehicle of the invention [2], the strength of the bracket portion can be further increased.

According to the link member for a vehicle of the invention [3] to [5], the aforementioned effects can be assuredly obtained.

According to the link member for a vehicle of the invention [6] to [8], the strength and durability can be further improved.

According to the link member for a vehicle of the invention [9], the bracket portion and the like can be formed at the intermediate connecting portion.

According to the link member for a vehicle of the invention [10] and [11], the aforementioned effects can be assuredly obtained.

According to the link member for a vehicle of the invention [12], the bracket portion can be formed into a bush mounting portion.

According to the link member for a vehicle of the invention [13], the bracket portion can be formed into a yoke portion.

According to the link member for a vehicle as described in item [14], further weight reduction can be attained.

According to the link member for a vehicle of the invention [15], a suspension arm having the same functions and effects as mentioned above can be obtained.

According to the method of manufacturing a link member for a vehicle of the invention [16], a link member for a vehicle having the same functions and effects as mentioned above can be manufactured.

According to the method of manufacturing a suspension arm of the invention [17], a suspension arm having the same functions and effects as mentioned above can be manufactured.

### BRIEF DESCRIPTION OF DRAWINGS

[Fig. 1] Fig. 1 is a perspective view showing a suspension arm of a first embodiment of the present invention.
[Fig. 2A] Fig. 2A is a plan view of the suspension arm of the first embodiment.
[Fig. 2B] Fig. 2B is a side view of the suspension arm of the first embodiment.
[Fig. 2C] Fig. 2C is a front view of the suspension arm of the first embodiment.
[Fig. 3A] Fig. 3A is a perspective view of a workpiece in a state before being processed in accordance with a manufacturing method of a suspension arm of the first embodiment.
[Fig. 3B] Fig. 3B is a perspective view of the workpiece in a state of being die-less processed in accordance with the manufacturing method of a suspension arm of the first embodiment.
[Fig. 3C] Fig. 3C is a partially cut-out view of an intermediate product in a state immediately after the die-less processing in accordance with the manufacturing method of the suspension arm of the first embodiment.
[Fig. 4] Fig. 4 is a perspective view of a suspension arm which is an angular shaped first modification of the present invention.
[Fig. 5A] Fig. 5A is a plan view of the suspension arm of the angular shaped first modification.
[Fig. 5B] Fig. 5B is a side view of the suspension arm of the angular shaped first modification.
[Fig. 5C] Fig. 5C is a front view of the suspension arm of the angular shaped first modification.
[Fig. 6] Fig. 6 is a perspective view of a suspension arm of an angular shaped second modification of the present invention.
[Fig. 7] Fig. 7 is a plan view of the suspension arm of the angular shaped second modification of the present invention.
[Fig. 8] Fig. 8 is a perspective view of a suspension arm of an angular shaped third modification of the present invention.
[Fig. 9] Fig. 9 is perspective view of an intermediate product for manufacturing the arm of the angular shaped third modification.
[Fig. 10] Fig. 10 is a perspective view of a suspension arm of an angular shaped fourth modification of the present invention.
[Fig. 11] Fig. 11 is a perspective view of an intermediate product for manufacturing the arm member of the angular shaped fourth modification.
[Fig. 12] Fig. 12 is a perspective view of a suspension arm of an angular shaped fifth modification of the present invention.
[Fig. 13] Fig. 13 is a perspective view of an intermediate product for manufacturing the arm member of the angular shaped fifth modification.
[Fig. 14] Fig. 14 is perspective view of a suspension arm which is a second embodiment of the present invention.
[Fig. 15A] Fig. 15A is a plan view of the suspension arm of the second embodiment.
[Fig. 15B] Fig. 15B is a side view of the suspension arm of the second embodiment.
[Fig. 15C] Fig. 15C is a front view of the suspension arm of the second embodiment.
[Fig. 16A] Fig. 16A is a perspective view of a workpiece in a state before being processed in accordance with a manufacturing method of the suspension arm of the second embodiment.
[Fig. 16B] Fig. 16B is a perspective view of the workpiece in a state of being die-less processed for manufacturing the suspension arm of the second embodiment.
[Fig. 16C] Fig. 16C is a partially cut-out view of an intermediate product in a state immediately after the die-less processing for manufacturing the suspension arm of the second embodiment.
[Fig. 17] Fig. 17 is a perspective view of a suspension arm which is a round shaped first modification of the present invention.
[Fig. 18] Fig. 18 is a perspective view of an intermediate product for manufacturing the arm member of the round shaped third modification.
[Fig. 19] Fig. 19 is a perspective view showing the suspension arm of a round shaped second modification of the present invention.
[Fig. 20A] Fig. 20A is a perspective view showing an intermediate product in a state immediately before being press-deformed in accordance with a method for manufacturing the suspension arm of the round shaped second modification of the present invention.
[Fig. 20B] Fig. 20b is a perspective view showing an intermediate product in a state immediately after being press-deformed in accordance with the method for manufacturing the suspension arm of the round shaped second modification of the present invention.
[Fig. 21] Fig. 21 is a perspective view showing a suspension arm which is a round shaped third modification of the present invention.
[Fig. 22] Fig. 22 is a perspective view showing an intermediate product for manufacturing the suspension arm of a round shaped third modification of the present invention.
[Fig. 23] Fig. 23 is a perspective view showing the suspension arm of a round shaped fourth modification of the present invention.
[Fig. 24] Fig. 24 is a perspective view showing a suspension arm which is a third embodiment of the present invention.
[Fig. 25A] Fig. 25A is a perspective view showing a workpiece in a state before being processed by a manufacturing method of the suspension arm of the third embodiment.
[Fig. 25B] Fig. 25B is a perspective view showing the workpiece in a state of being subjected to upset forging processing by a manufacturing method of the suspension arm of the third embodiment.
[Fig. 25C] Fig. 25C is a partially cut-out view showing an intermediate product in a state immediately after the upset forging processing for manufacturing the suspension arm of the third embodiment.
[Fig. 26] Fig. 26 is a perspective view of a conventional suspension arm.
[Fig. 27A] Fig. 27A is a plan view of the conventional suspension arm.
[Fig. 27B] Fig. 27B is a side view of the conventional suspension arm.
[Fig. 27C] Fig. 27C is a front view of the conventional suspension arm.

### DESCRIPTION OF THE REFERENCE NUMERALS

2: bracket portion
21: bush mounting hole
2a: bracket portion
3: intermediate shaft portion
4, 4a: shape transitional portion
5: yoke portion
51: both side walls
S1 to S3: suspension arm (link member for a vehicle)
S11 to S15: suspension arm (link member for a vehicle)
S21 to 524: suspension arm (link member for a vehicle)
W1 to W3: workpiece

### BEST MODE FOR CARRYING OUT THE INVENTION

### <FIRST EMBODIMENT>

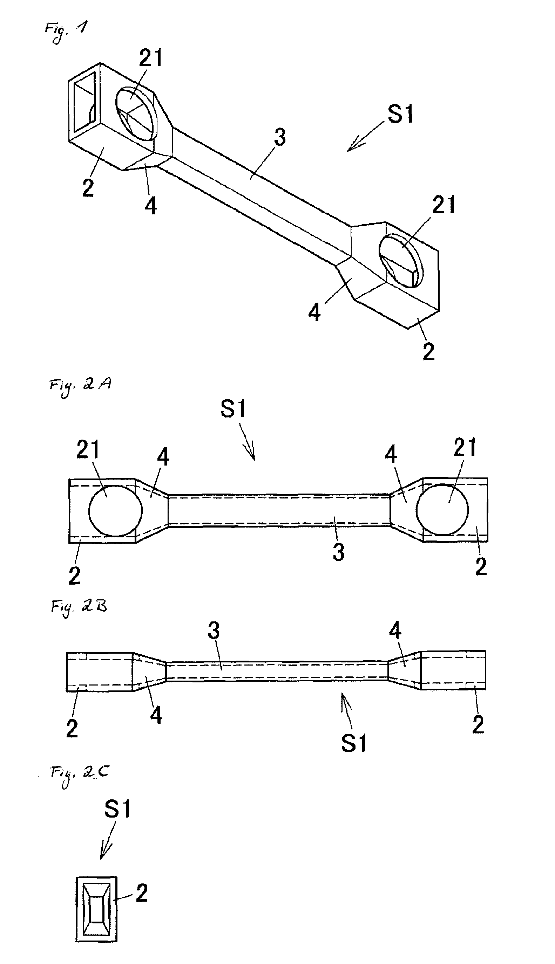

Figs. 1 and 2A to 2C show a suspension arm S1 as a link member for a vehicle according to a first embodiment of the present invention.

As shown in these figures, the suspension arm S1 of this embodiment is a link member for an automobile underbody member and constituted by an integrally formed product having a hollow angular-pipe shape. This suspension arm S1 has bracket portions 2 and 2 arranged at both ends, an intermediate shaft portion 3 connecting both the bracket portions 2 and 2, and shape transitional portions 4 and 4 each disposed between the bracket portion 2 and the intermediate shaft portion 3.

The bracket portion 2 is formed into a rectangular shape (oblong shape) in cross-section. The size (outer diameter size) of the bracket portion 2 in the radial direction orthogonal to the longitudinal direction (axial direction) of the suspension arm S1 is formed to be larger than the outer diameter size of the intermediate shaft portion 3, and the thickness of the peripheral wall forming the bracket portion 2 is formed to be larger than the thickness of the peripheral wall forming the intermediate shaft portion 3.

Furthermore, the bracket portion 2 is provided with a circular bush mounting hole 21 penetrating the bracket portion in the radial direction and formed as a bush mounting portion.

The intermediate shaft portion 3 constitutes an intermediate connecting portion, and has a rectangular (oblong) cross-sectional shape similar to the cross-sectional shape of the bracket portion 2. Further, the intermediate shaft portion 3 is formed to have the same outer diameter size (cross-sectional shape) at any positions along the axial direction.

Each of the shape transitional portions 4 and 4 is formed into a rectangular (oblong) cross-section similar to that of the bracket portion 2 and that of the intermediate shaft portion 3. Furthermore, each shape transitional portions 4 and 4 smoothly and continuously changes in cross-sectional shape so that its outer diameter size and thickness gradually decrease as it gets closer from the bracket portions 2 and 2 to the intermediate shaft portion 3.

In the present invention, the radial size basically corresponds to an outer diameter size, but can be defined as an inner diameter size. Furthermore, the radial size denotes the longest size among all sizes in the radial direction. In cases where the cross-section is rectangular (oblong) like in this embodiment, the radial size in the direction of the diagonal line denotes the radial size. Therefore, in this embodiment, the diagonal line of the bracket portion 2 is longer than the diagonal line of the intermediate shaft portion 3.

In the present invention, in cases where the cross-section of the bracket portion 2 or that of the intermediate shaft portion 3 is circular like in the following embodiments and modifications thereof, the diameter is defined as the radial size, and in cases where the cross-section is elliptical or oval, the size in the direction of the long axis is defined as the radial size. Therefore, for example, in cases where the bracket portion 2 is quadrilateral in cross-section and the intermediate shaft portion 3 is circular in cross-section, the diagonal line length of the bracket portion 2 and the diameter of the intermediate shaft portion 3 are compared; and in cases where the bracket portion 2 is circular in cross-section and the intermediate shaft portion is quadrilateral in cross-section, the diameter of the bracket portion 2 and the diagonal line length of the intermediate shaft portion 3 are compared.

Further, in the present invention, in cases where after performing plastic working (primary processing) such as die-less processing or upset forging processing as will be explained below, mechanical working (secondary processing) such as press working or cutting work is performed to deform the bracket portion 2, the radial size of each portion 2 to 4 is measured in a state before the secondary processing but after the primary processing (in a state of an intermediate product), and portions are compared based on the radial sizes.

Further, in measuring the thickness of the peripheral wall, there is no problem when the thickness of the peripheral wall in the cross-section is constant at each portion of the bracket portion 2, the intermediate shaft portion 3, and the shape transitional portion 4. However, if the thickness of the peripheral wall in the cross-section is not constant; in other words, if the thickness of the peripheral wall differs at positions in the circumferential direction, the thickness of the thickest portion is used as the thickness of the peripheral wall for each portion.

Furthermore, in the case of deforming the bracket portion 2 and the like by secondary processing, in the same manner as explained above, in a state after performing the primary processing but before performing the secondary processing (in a state of an intermediate product), the wall thickness of each portion 2-4 is measured, and the portions are compared based on the thicknesses of the peripheral walls.

In the first embodiment, the aforementioned suspension arm S1 is produced by subjecting a pipe-shaped workpiece W1 to die-less processing as plastic working (mechanical working).

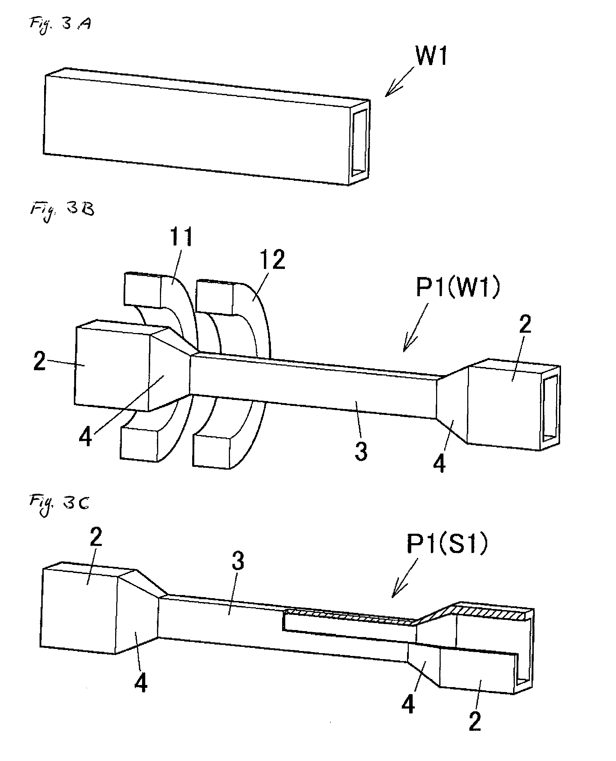

As shown in Fig. 3, a die-less processing device for performing die-less processing is configured to perform processing of the workpiece W1 while transferring the workpiece W1 along the length thereof, and is equipped with a heating device 11 and a cooling device 12 arranged along the transferring route of the workpiece W1. Furthermore, the die-less processing device is equipped with a feeding device (not illustrated) that transfers the workpiece W1 while holding the upstream side end portion (basal end portion) and a tension device (not illustrated) that pulls the workpiece while gripping the downstream side end (tip end portion).

Also, the workpiece W1 is constituted by a pipe-shaped extruded product with a rectangular (oblong) cross-sectional shape obtained by continuously extruding aluminum or its alloy material by a well-known extruder.

In addition, in this embodiment, the workpiece W1 is fed along the longitudinal direction (axial direction) with a feeding device while being heated by a heating device 11; and at the same time, the workpiece W1 is pulled by a tension device at a speed faster than the feeding speed. In this way, tension is applied to the heated portion of the workpiece W1 so that the heated portion of the workpiece W1 deforms in a way such that the diameter reduces and the thickness reduces. Furthermore, the portion deformed in shape is cooled by the cooling device 12 and solidified (frozen) to be stabilized.

Specifically, in the workpiece W1, the portion of the suspension arm S1 corresponding to the bracket portion 2 of the downstream side end portion (right side end portion in Fig. 3) is pulled at a constant speed by setting so that the pulling speed by the tension device becomes equal to the feeding speed by the feeding device. This applies almost no pulling force (deformation force) to the heated portion of the workpiece W1, which enables the cross-sectional shape to be maintained almost in the original shape.

Needless to say, a certain amount of tension or compressing force can be applied to the portion of the workpiece corresponding to the bracket portion 2 at the downstream side end portion to stretch the portion to reduce the diameter and thickness or compress the portion to increase the diameter and thickness.

Next, at the portion of the workpiece W1 corresponding to the downstream side shape transitional portion 4 (right side in Fig. 3) of the suspension arm S1, with the pulling speed by the tension device set to be faster than the feeding speed of the feeding device, the pulling speed is increased gradually. In this way, the tension to the heated portion of the workpiece W1 is gradually increased to thereby gradually increase the pulling amount of the portion to cause deformation of the portion such that the diameter and thickness of the portion decrease. This causes the downstream side portion corresponding to the shape transitional portion 4 to be formed into a tapered shape such that the outer diameter size and the thickness gradually decrease from the downstream side to the upstream side.

In this embodiment, regarding the pulling speed of the tension device, the initial speed for forming the downstream side shape transitional portion 4 is set to be equal to the speed at which the portion corresponding to the downstream side bracket portion 2 was formed.

Next, at the portion of the workpiece W1 corresponding to the intermediate shaft portion 3 of the suspension arm S1, with the pulling speed of the tension device set to be higher than the pulling speed of the feeding device, the pulling is performed at a constant speed. In this way, constant tension is applied to the heated portion of the workpiece W1 to stretch the portion to thereby reduce the diameter and thickness of the portion. This causes the portion of the workpiece corresponding to the intermediate shaft portion 3 to be formed into a long and thin angular pipe shape such that the outer diameter size and thickness become smaller that those of the bracket portion 2 and the outer diameter size, and the thickness become equal at the entire area covering from the downstream side to the upstream side.

In this embodiment, the pulling speed by the pulling device for forming the intermediate shaft portion 3 is equal to the final speed at which the downstream side shape transitional portion 4 was formed.

Next, at the portion of the workpiece W1 corresponding to the upstream side shape transitional portion 4 (left side in Fig. 3) of the suspension arm S1, with the pulling speed by the tension device set to be faster than the pulling speed of the feeding device, the pulling speed is decreased gradually. In this way, the tension to the heated portion of the workpiece W1 is gradually decreased to thereby gradually decrease the pulling amount of the portion to cause deformation of the portion such that the diameter and thickness of the portion decrease. This causes the portion corresponding to the upstream side shape transitional portion 4 to be formed into a tapered shape such that the outer diameter size and the thickness gradually increase from the downstream side to the upstream side.

In this embodiment, regarding the pulling speed of the tension device, the initial speed for forming the upstream side shape transitional portion 4 is set to be equal to the speed at which the intermediate shaft portion 3 is formed.

Next, in the workpiece W1, at the portion corresponding to the upstream side bracket portion 2 (left side end portion in Fig. 3) of the suspension arm S1, the portion is moved at a constant speed with the pulling speed of the tension device set equal to the feeding speed by the feeding device. This applies no pulling force (deformation force) to the heated portion of the workpiece W1, which enables the cross-sectional shape to be maintained in the original shape.

Needless to say, a certain amount of tension or compressing force can be applied to the portion of the workpiece corresponding to the bracket portion 2 at the downstream side end portion to stretch the portion to thereby reduce the diameter and thickness or compress the portion to thereby increase the diameter and thickness.

In this embodiment, regarding the pulling speed of the tension device, the speed for forming the shape transitional portion 4 located at the upstream side is set to be equal to the final speed at which the upstream side shape transition portion 2 was formed.

In the intermediate product P1 as a die-less processed product to which die-less processing (primary processing) was performed, the bracket portions 2 and 2 arranged at both ends are subjected to press working (secondary processing) to form circular bush mounting holes 21 and 21, and thus a suspension arm S1 is produced.

In the suspension arm S1, the bracket portions 2 and 2 arranged at both ends are each formed such that the outer diameter is larger than that of the intermediate shaft portion 3 and the peripheral wall is thicker than that of the intermediate shaft portion 3, and that the shape transitional portion 4 and 4 between the bracket portion 2 and the intermediate shaft portion 3 is formed into a tapered shape which smoothly and continuously changes from the cross-sectional shape of the bracket portions 2 and 2 to the cross-sectional shape of the intermediate shaft portion 3.

As explained above, since the suspension arm S1 of the first embodiment is constituted by a metal integrally formed product in the bracket portions 2 and 2, the shape transitional portions 4 and 4, and the intermediate shaft portion 3 are integrally formed, sufficient connecting strength can be secured, for example, between the portions 2 to 4. Therefore, in the suspension arm S1 of this embodiment, different from a conventional product in which portions are fixed by, e.g., welding, the oval strength can be further improved, which can further improve the durability and reliability.

Further, the suspension arm S1 of the first embodiment has a hollow pipe shape, which enables to attain weight reduction while securing sufficient strength.

Furthermore, in this embodiment, the intermediate shaft portion 3, which receives less stress during the actual use in a state in which it is attached to an automobile, is formed to be small in diameter and thin in wall thickness, which enables to attain further weight reduction while securing sufficient strength.

Even further, in the suspension arm S1 of this embodiment, the intermediate shaft portion 3 is formed to have a small diameter, which enables space-efficient assembly to, e.g., an automobile. This effectively prevents interference of the intermediate shaft portion 3 with peripheral members, which in turn can simplify the overall vehicle underbody member.

Furthermore, in this embodiment, the shape transitional portion 4 is formed between the bracket portion 2 with a large diameter and the intermediate shaft portion 3 with a small diameter such that the cross-sectional shape of the intermediate shaft portion 4 changes smoothly and continuously from the bracket portion 2 to the intermediate shaft portion 3, and therefore there is no portion in which the shape changes suddenly, or stress concentrates. Therefore, the stress applied to the suspension arm S1 is dispersed evenly at the entire arm without causing partial stress concentration on the shape transitional portion 4 and the like, which enables further improvement of the strength and durability.

Furthermore, in the suspension arm S1 of this embodiment, die-less processing is performed as the primary processing, eliminating the use of molding dies, which can reduce costs and attain efficient processing. This results in improved productivity.

Also, the suspension arm S1 of this embodiment is manufactured by subjecting the extruded product as a workpiece W1 to stretching (die-less processing), which enables production of a long product and improves the general versatility.

In the die-less processing method of the aforementioned embodiment, tension is applied to the workpiece W1 to cause deformation thereof, but the present invention is not limited to that, and allows application of compressing force to cause deformation. That is, the present invention allows application of compressing force to the heated portion of the workpiece as an extruded product by setting the pulling speed of the tension device slower than the feeding speed of the feeding device to deform the heated portion (required portion) to thereby increase the diameter and thickness.

Obviously, the present invention allows the use of a die-less processing method that causes both the diameter-and-thickness decrease deformation by stretching and the diameter-and-thickness increase deformation by compressing force.

Furthermore, in the aforementioned embodiment, one of the bracket portions (bush mounting portion) and the other bracket portion (bush mounting portion) are set to be equal in outer diameter and wall thickness. However, the invention is not only limited to it, and it can be set such that the bracket portions arranged at both ends are different from each other in outer diameter and thickness.

### <ANGULAR SHAPED FIRST MODIFICATION>

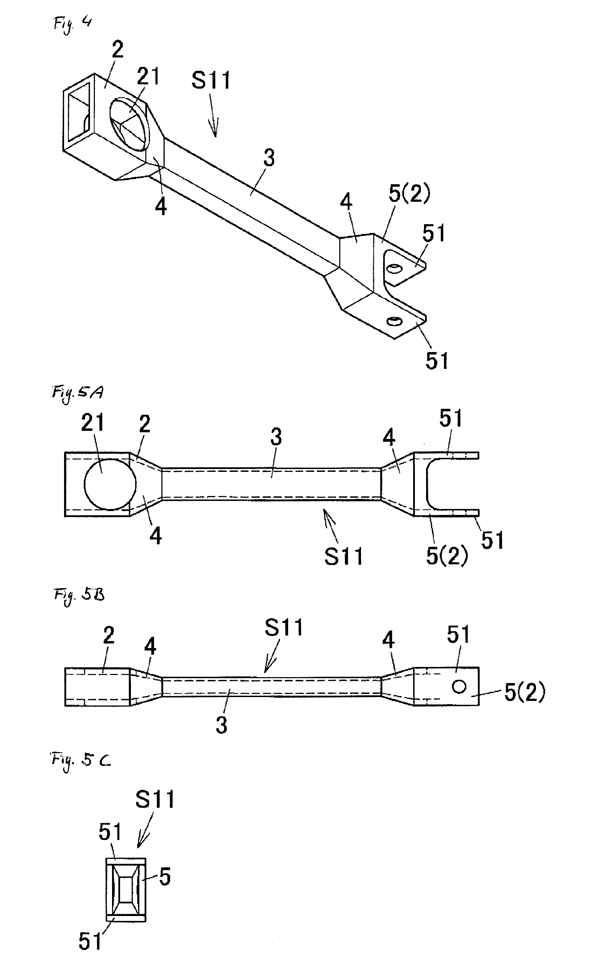

Figs. 4 and Fig. 5A to 5C show a suspension arm S11 as a link member for a vehicle according to an angular shaped first modification of the present invention. As shown in these figures, the suspension arm S11 of the angular shaped first modification differs from the suspension arm S1 of the aforementioned first embodiment in that one of the bracket portions 2 and 2 arranged at both ends is formed into a yoke portion 5.

That is, in the same manner as in the aforementioned first embodiment, in the suspension arm S11 of this modification, an intermediate product P1 is obtained by subjecting an extruded product as a workpiece W1 (see Fig. 3) to die-less processing (primary processing).

Thereafter, in the same manner as mentioned above, in the intermediate product P1, one of the bracket portions 2 is subjected to press working (secondary processing) to form a bush mounting hole 21 and the other bracket portion is subjected to press working (secondary processing) to form a yoke portion 5.

The yoke portion 5 is processed so that opposing two side walls 51 and 51 among the surrounding four walls remain and that shaft supporting holes 52 and 52 are formed in both the side walls.

Further, either the formation of the bush mounting hole 21 or the finishing of the yoke portion 5 can be performed first, or they can be performed simultaneously.

In the suspension arm S11 of the angular first modification, the other structure is essentially the same as that of the suspension arm S1 of the first embodiment, and therefore duplicate descriptions will be omitted by allotting the same reference numeral to the same or corresponding portion.

Also in this suspension arm S11 of this modification, the functions and effects can be obtained in the same manner as in the aforementioned first embodiment.

In addition, in the aforementioned embodiment and the like, at least one of the bracket portions 2 and 2 arranged at both ends is formed as a bush mounting portion. However, the present invention is not limited to that, and the bracket portions 2 and 2 arranged at both sides can be formed as yoke portions 5. Furthermore, both the bracket portions 2 and 2 are not limited to bush mounting portions or yoke portions 5, and can be formed into any structure so long as it is possible to connect other members.

### <ANGULAR SHAPED SECOND MODIFICATION>

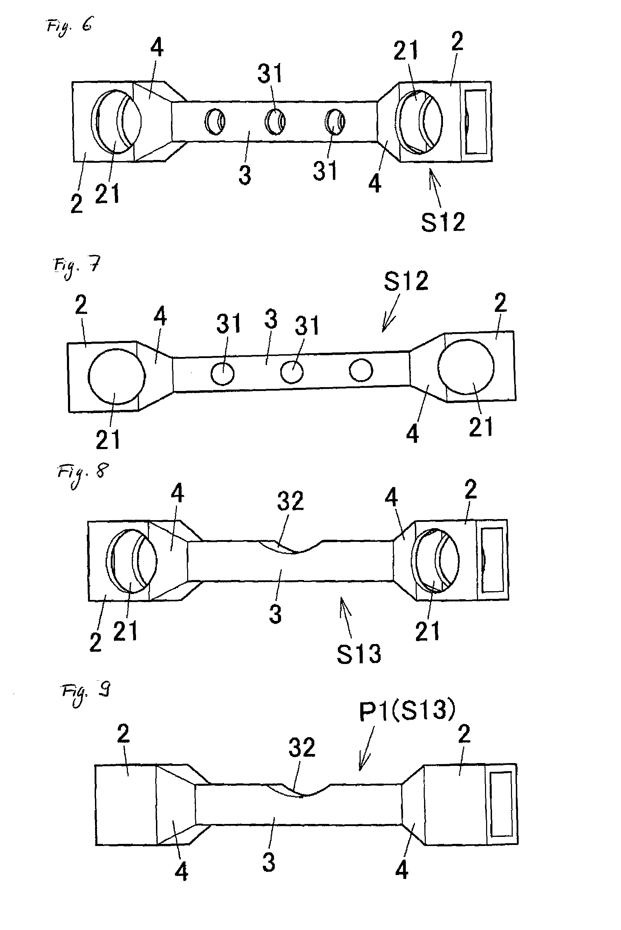

Figs. 6 and 7 show a suspension arm S12 as a link member for a vehicle that is an angular shaped second modification of the present invention. As shown in both figures, the suspension arm S12 of the angular shaped second modification differs from the suspension arm S1 of the aforementioned first embodiment in that a plurality of punched holes 31 are formed at predetermined intervals along the axial direction of the intermediate shaft portion 3.

In the suspension arm S12 of this modification, in the same manner as in the first embodiment, after obtaining an intermediate product P1 by subjecting the rectangular pipe-shaped workpiece W1 of an extruded product to die-less processing (primary processing), bush mounting holes 21 and 21 are formed in the bracket portions 2 and 2 arranged at both ends by press working (secondary processing), and a plurality of through-holes 31 penetrating in the radial direction are formed in the intermediate shaft portion 3.

Through holes 31 can be formed before or after forming the bush mounting holes 21. Alternatively, these holes 21 and 31 can be formed simultaneously.

In the suspension arm S12 of the angular shaped second modification, the other structure is essentially the same as that of the suspension arm S1 of the first embodiment, and therefore duplicate descriptions will be omitted by allotting the same reference numeral to the same or corresponding portion.

Also in this suspension arm S12 of this modification, in the same manner as in the aforementioned first embodiment, the same functions and effects can be obtained.

Furthermore, according to the suspension arm S12, since a plurality of through-holes 31 are formed in the intermediate shaft portion 3, materials can be reduced for that amount, resulting in further weight reduction and cost reduction. In addition, the intermediate shaft portion 3 has less stress burden in actual usage regardless of formation of the through-holes 31, which can secure sufficient strength.

### <ANGULAR SHAPED THIRD MODIFICATION>

Fig. 8 shows a suspension arm S13 as a link member for a vehicle which is a angular shaped third modification of the present invention. As shown in the figure, the suspension arm S13 of the angular shaped third modification differs from the suspension arm S1 of the aforementioned first embodiment in that a concave portion 32 is formed at the longitudinally intermediate position of the intermediate shaft portion 3.

In the suspension arm S13 of this modification, in the same manner as in the first embodiment, after obtaining an intermediate product P1 by subjecting a angular pipe-shaped workpiece W1 of an extruded product to die-less processing (primary processing) (see Fig. 3), in the intermediate product P1, the intermediate position of the intermediate shaft portion 3 is press-deformed by press working (secondary processing) to form the concave portion 32 as shown in Fig. 9, and bush mounting holes 21 and 21 are formed in the bracket portions 2 and 2 at both ends by press working (secondary processing) or the like as shown in Fig. 8.

The forming of the concave portion 32 can be done before or after forming the bush mounting holes 21.

In the suspension arm S13 of this modification, the other structure is the same as that of suspension arm S1 of the first embodiment, and therefore duplicate descriptions will be omitted by allotting the same reference numeral to the same or corresponding portion.

Also in this suspension arm S13 of the modification, in the same manner as in the first embodiment, the same functions and effects can be obtained.

In addition, according to the suspension arm S13, interference with other members can be effectively prevented at the time of the installation to an automobile. That is, because the installation space in an automobile is limited, the suspension arm S13 may sometimes interfere with other members. In such a case, interference with other members can be assuredly prevented by forming a concave portion 32 at a portion that may cause interference with other members, which enables more efficient mounting in terms of spacing.

In the angular shaped third modification, the concave portion 32 is formed at a portion of the intermediate shaft portion 3, but not limited to that, and the entire intermediate shaft portion 3 can be press-deformed to form the entire intermediate shaft portion into a flat shape.

Furthermore, in the aforementioned angular shaped second and third modifications, through-holes 31 and concave portions 32 are formed, respectively, in the intermediate shaft portion 3 by press working or the line, but the present invention is not limited that. Through-holes and/or concave portions (cut-out concave portions) can be formed in the intermediate shaft portion by cutting work or the like. In the case of forming cut-out concave portions, materials can be reduced for that amount, and weight reduction and cost reduction can also be attained.

### <ANGULAR SHAPED FOURTH MODIFICATION>

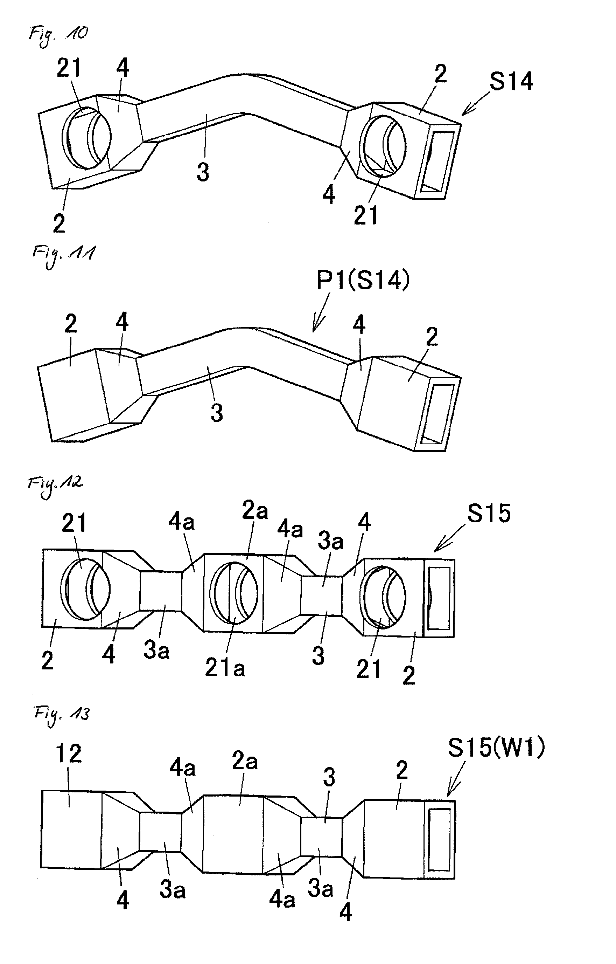

Fig. 10 shows a suspension arm S14 as a link member for a vehicle which is an angular shaped fourth modification of the present invention. As shown in the figure, the suspension arm S14 of the angular shaped fourth modification differs from the suspension arm S1 of the aforementioned first embodiment in that the intermediate shaft portion 3 is bent at an intermediate position.

In the suspension arm S14 of this modification, in the same manner as in the first embodiment, after obtaining the intermediate product P1 by subjecting the rectangular pipe-shaped workpiece W1 of an extruded product to die-less processing (primary processing) (see Fig. 3C), in the intermediate product P1, the intermediate shaft portion 3 is subjected to bending work (secondary processing) by press working and the like to form a bent portion 33 at an intermediate position as shown in Fig. 11, and bush mounting holes 21 and 21 are formed in the bracket portions 2 and 2 at both ends by press working (secondary processing) and the like as shown in Fig. 10.

The bending of the intermediate shaft portion 3 can be done before or after forming the bush mounting holes 21.

Also in this suspension arm S14 of the modification, the same functions and effects can be obtained in the same manner as mentioned above.

In addition, according to the suspension arm S14, since the intermediate shaft portion 3 is bent, the suspension arm S14 can be bent into an appropriate shape in accordance to the mounting space shape, and possible interference with other members can be assuredly prevented, enabling efficient installation in terms of spacing.

### <ANGULAR SHAPED FIFTH MODIFICATION>

Fig. 12 shows a suspension arm S15 as a link member for a vehicle which is an angular shaped fifth modification of the present invention. As shown in the figure, the suspension arm S15 of this modification is provided with a bracket portion 2a and shape transitional portions 4a and 4a in the intermediate portion (intermediate connecting portion), and the intermediate shaft portion 3 is divided into two intermediate shaft portions 3a and 3a via the intermediate bracket portion 2a.

That is, in the suspension arm S15, both the bracket portions 2 and 2 arranged at both ends and the shape transitional portions 4 and 4 arranged at both ends have the same structure as that of the aforementioned first embodiment.

Also, the intermediate bracket portion 2a is constituted as an intermediate large-diameter portion (bush mounting portion), and provided with circular bush mounting holes 21a penetrating in the radial direction in the same manner as in the bracket portions 2 arranged on both ends. Furthermore, the intermediate bracket portion 2a has the same outer diameter size and peripheral wall thickness as those of the bracket portions 2 arranged at both ends, and is formed into the same cross-sectional shape as that of the bracket portion 2.

The cross-sectional shape of the shape transitional portions 4a and 4a arranged at both sides of the intermediate bracket portion 2a smoothly changes in the same manner as in the shape transitional portions 4 and 4 arranged at both ends so that the outer diameter size and the thickness gradually decrease from the intermediate bracket portion 2a to the intermediate shaft portion 3a and 3a.

In this angular shaped fifth modification, the intermediate connecting portion is constituted by the intermediate shaft portions 3a and 3a, the intermediate bracket portion 2a, and the shape transitional portions 4a and 4a arranged at the intermediate side. Furthermore, the intermediate large-diameter portion and the bush mounting portion are constituted by the intermediate bracket portion 2a.

In this suspension arm S15 of this modification, an angular pipe-shaped extruded product, which is similar to the aforementioned first embodiment, is used as a workpiece (see Fig. 3A).

An angular pipe-shaped workpiece W1 is subjected to die-less processing (primary processing) to obtain an intermediate product P15 as shown in Fig. 13.

That is, the portions of the workpiece W1 corresponding to the bracket portions 2 and 2a are pulled in a state in which tension is weakened or tension is essentially not applied to be processed so that the outer diameter size and the thickness each have a predetermined large size. Furthermore, the portions corresponding to the shape transitional portions 4 and 4a are pulled while gradually increasing or decreasing tension to gradually decrease or increase the outer diameter size and thickness to be processed into a tapered shape. Further, the portions corresponding to the intermediate shaft portions 3a and 3a are pulled to be processed with the tension kept high so that the outer diameter size and the thickness become a predetermined small size.

For the intermediate product P15 obtained as a die-less process product as mentioned above, circular bush mounting hole 21 is formed in each of the end and intermediate bracket portions 2 and 2a by press working (secondary processing) to produce a suspension arm S15 of the angular shaped fifth modification as shown in Fig. 12.

In this modification, the other structure is essentially the same as that of the suspension arm S1 of the first embodiment, and therefore duplicate descriptions will be omitted by allotting the same reference numeral to the same or corresponding portion.

Also in this suspension arm S15 of the modification, the same functions and effects can be obtained in the same manner as in the aforementioned first embodiment.

Furthermore, the suspension arm S15 is provided with the bracket portion 2a as the bush mounting portion at an intermediate connecting portion, and therefore another member can be connected to that position via a bush. This further improves the versatility.

Like this modification, in cases where an intermediate large-diameter portion such as a bracket portion (bush mounting portion) is formed at the intermediate connecting portion, the shape of the intermediate large-diameter portion such as the outer diameter size and the peripheral wall thickness is not always required to be the same as the shape of the bracket portion arranged at both ends, and can be different from the shape of the bracket portion.

### <SECOND EMBODIMENT>

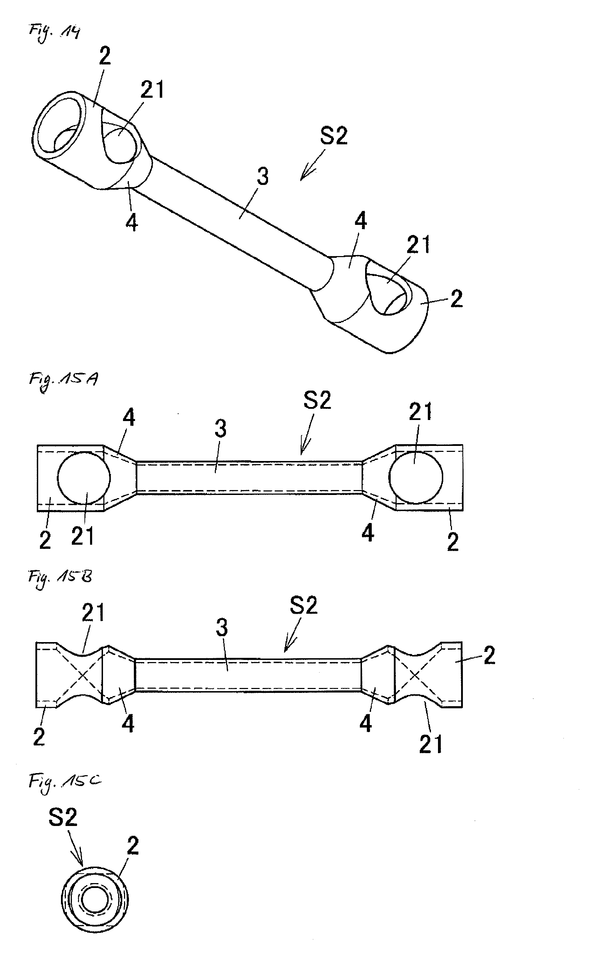

Figs. 14 and Figs. 15A to 15C show a suspension arm S2 as a link member for a vehicle which is a second embodiment of the present invention. As shown in these figures, the suspension arm S2 of the second embodiment differs from the suspension arm S1 of the aforementioned first embodiment in that it is formed into a hollow round pipe-shaped circular shape in cross-section.

In other words, this suspension arm S2 is provided with bracket portions 2 and 2, an intermediate shaft portion 3, and shape transitional portions 4 and 4. Each of the portions 2, 3, and 4 has a circular cross-sectional shape.

The bracket portion 2 is formed so that the outer diameter size is larger than the outer diameter size of the intermediate shaft portion 3, and the thickness of the peripheral wall forming the bush mounting portion 2 is thicker than the thickness of the peripheral wall forming the intermediate shaft portion 3.

The shape transitional portion 4 and 4 smoothly and continuously changes in cross-section so that the outer diameter size and the thickness gradually decrease from the bracket portion 2 to the intermediate shaft portion 3.

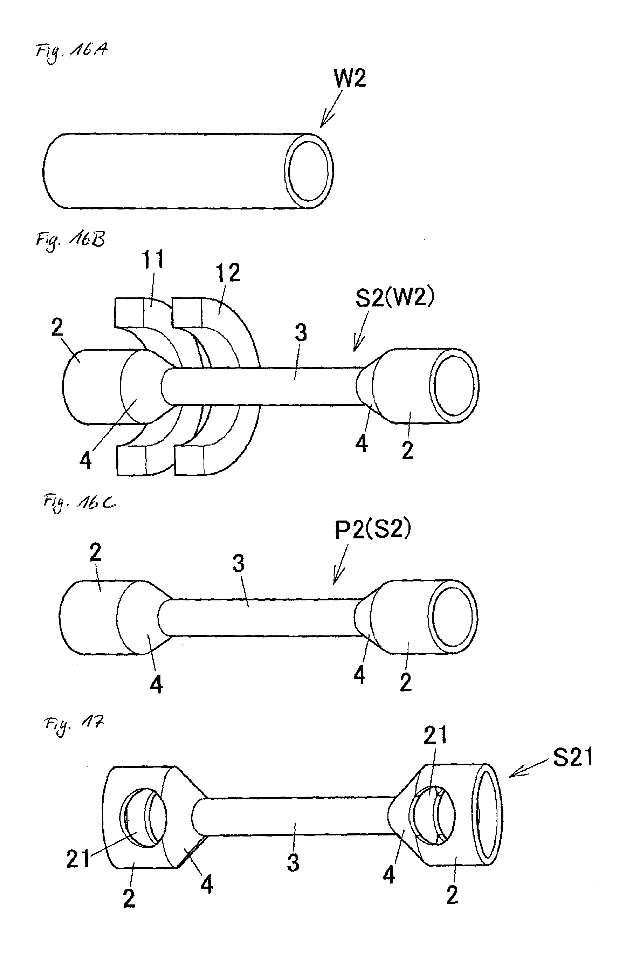

The suspension arm S2 of this second embodiment is manufactured essentially in the same manner as in the aforementioned first embodiment except that a round pipe-shaped extruded product is used as the workpiece W2 as shown in Fig. 16A.

That is, as shown in Figs. 16A and 16B, the portions of the workpiece W2 corresponding to the bracket portions 2 and 2 are pulled in a state in which tension is weakened or tension is essentially not applied to be processed so that the outer diameter size and the thickness each become a predetermined large size. Furthermore, the portions corresponding to the shape transitional portions 4 are pulled while gradually increasing or decreasing tension to gradually decrease or increase the outer diameter size and thickness to be processed into a tapered shape. Further, the portion corresponding to the intermediate shaft portion 3 is pulled to be processed with the tension kept high so that the outer diameter size and the thickness become a predetermined small size. With this, as shown in Fig. 16C, an intermediate product P2 as a die-less processed (primarily processed) product is obtained.

In this intermediate product P2, bracket portions 2 and 2 arranged at both ends are subjected to press working (secondary processing) to form circular bush mounting holes 21 and 21 to thereby form a suspension arm S2 of this second embodiment as shown in Figs. 14 and 15.

In the suspension arm S2 of the second embodiment, the other structure is essentially the same as that of the suspension arm S1 of the first embodiment, and therefore duplicate descriptions will be omitted by allotting the same reference numeral to the same or corresponding portion.

Also in this suspension arm S2 of the second embodiment, the same functions and effects can be obtained in the same manner as in the aforementioned first embodiment.

### <ROUND SHAPED FIRST MODIFICATION>

Fig. 17 shows a suspension arm S21 as a link member for a vehicle which is a round shaped first modification of the present invention. As shown in this figure, the suspension arm S21 of this modification differs from the suspension arm S2 of the aforementioned second embodiment in that the bracket portions 2 and 2 arranged at both ends are each formed into a flat shape.

In this suspension arm S21 of this modification, in the same manner as in the second embodiment, after obtaining an intermediate product P2 by subjecting the round pipe-shaped workpiece W2 of an extruded product to die-less processing (primary processing), the bracket portions 2 and 2 arranged at both ends of the intermediate product P2 are press-deformed in the radial direction into a flat shape by press working (secondary processing). Thereafter, the flattened bracket portions 2 and 2 are subjected to press working (secondary processing) to thereby form round bush mounting holes 21 and 21 penetrating in the same direction as the press-deformed direction.

In the case of press-deforming a bracket portion 2 like this modification, a bush mounting hole 21 can be formed before the press-deformation. However, the dimensional accuracy can be improved by forming the bush mounting hole 21 after the press-deformation. For this reason, it is preferable to form a bush mounting hole 21 after the press-deformation.

In the suspension arm S21 of the round shaped first modification, the other structure is essentially the same as that of the suspension arm S2 of the second embodiment, and therefore duplicate descriptions will be omitted by allotting the same reference numeral to the same or corresponding portion.

Also in this suspension arm S21 of the modification, the same functions and effects can be obtained in the same manner as in the aforementioned second embodiment.

Furthermore, in the suspension arm S21, the bracket portions 2 and 2 as bush mounting portions are press-deformed into a flattened shape, therefore even in cases where the outer diameter size of the workpiece W2 is smaller than the outer diameter (diameter) of a bush, press-deformation enlarges the width, resulting in a sufficient width as a bush mounting portion (bracket portion). In other words, there is no need to use a workpiece W2 with an outer diameter size bigger than necessary, enabling employment of a workpiece W2 with the minimum outer diameter size, which results in further weight reduction and cost reduction.

### <ROUND SHAPED SECOND MODIFICATION>

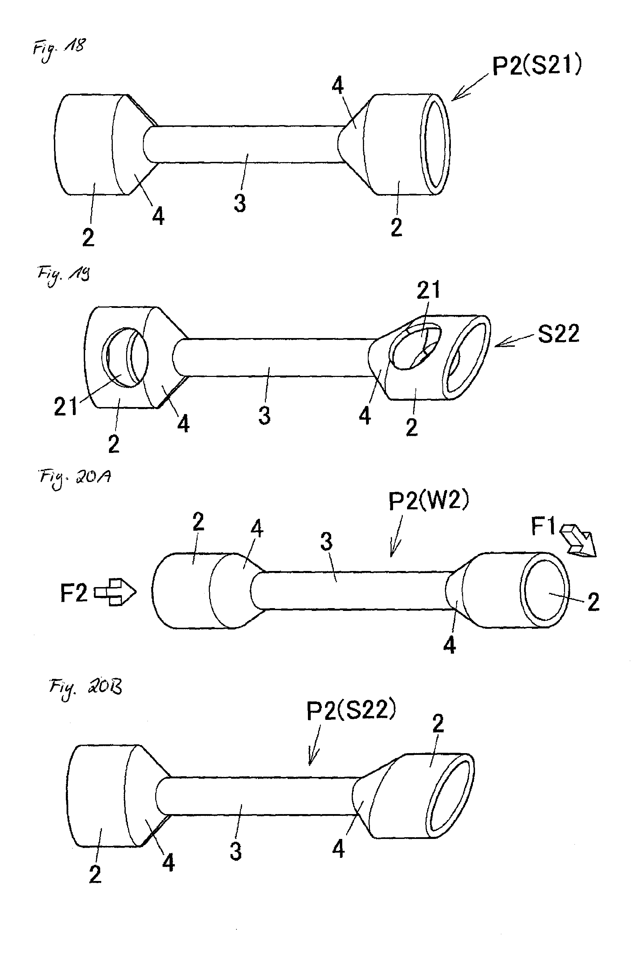

Fig. 19 shows a suspension arm S22 as a link member for a vehicle which is a round shaped second modification of the present invention. As shown in this figure, the suspension arm S22 of this modification differs from the aforementioned second embodiment and the round shaped first modification in that the bracket portions 2 and 2 arranged at both ends are formed into flat shapes with different phases.

In the suspension arm S22 of this modification, in the same manner as in the second embodiment, a round pipe-shaped workpiece W2 of an extruded product is subjected to die-less processing (primary processing) to produce an intermediate product P2. Thereafter, shown in Fig. 20A, the bracket portions 2 and 2 arranged at both ends of the intermediate product P2 are press-deformed into a flattened shape by press working (secondary processing). At this time, as shown in the figure, the press-deforming direction F1 of the bracket portion 2 on one side and the press-deforming direction F2 of the bracket portion 2 on the other side are shifted in phase in the circumferential direction (direction around the axial direction). As a result, the bracket portion 2 arranged at one end side is arranged so as to be shifted in the circumferential direction of the bracket portion 2 arranged at the other end side.

Thus, an intermediate product P2 with press-deformed bracket portions 2 and 2 at both ends is obtained as shown in Fig. 20B.

After that, as shown in Fig. 19, circular bush mounting holes 21 and 21 penetrating in the same direction as the press-deformed direction are formed in each of the bracket portions 2 and 2 by press working (secondary processing) to thereby obtain the suspension arm S22 of this modification. Obviously, in the suspension arm S22 of this modification, the axial directions of the bush mounting holes 21 and 21 at both ends are disposed so as to be shifted in the circumferential direction.

Also in this modification, in the same manner as in the aforementioned round shaped first modification, the dimensional accuracy can be improved by forming the bush mounting holes 21 after the press-deformation.

In the suspension arm S22 of this round shaped second modification, the other structure is essentially the same as that of the second embodiment and the round shaped first modification, and therefore duplicate descriptions will be omitted by allotting the same reference numeral to the same or corresponding portion.

Also in the suspension arm S22 of this modification, the same functions and effects can be obtained in the same manner as in the aforementioned second embodiment.

Further, according to the suspension arm of the present invention like this modification, the bush mounting directions of the bracket portions 2 and 2 as bush mounting portions can be adjusted arbitrarily, resulting in further improved versatility.

### <ROUND SHAPED THIRD MODIFICATION>

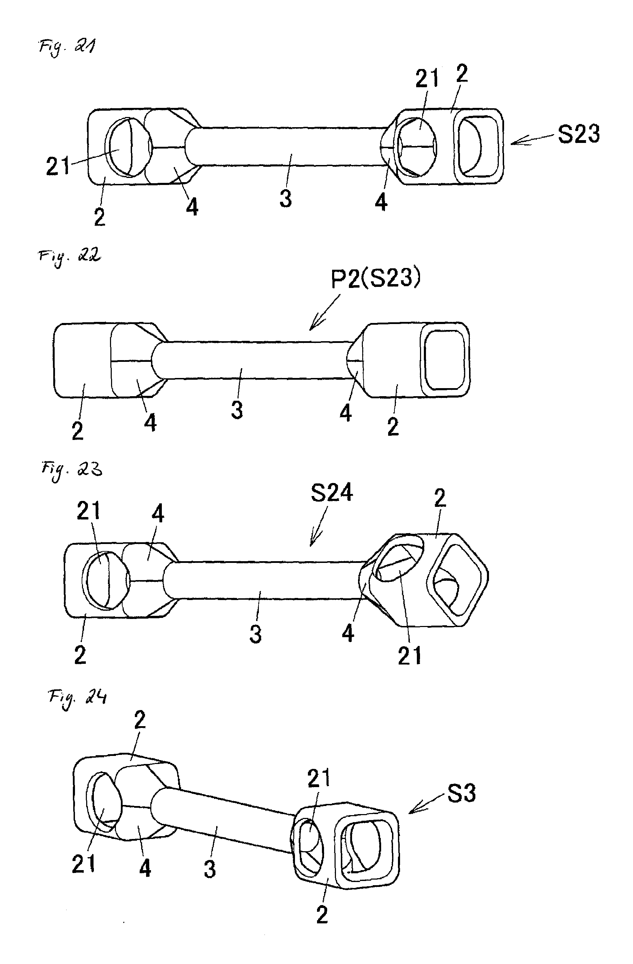

Fig. 21 shows a suspension arm S23 as a link member for a vehicle which is a round shaped third modification of the present invention. As shown in this figure, the suspension arm S23 of this modification differs from the suspension arm S2 of the second embodiment in that the bracket portions 2 and 2 arranged at both ends are finished into an angular shape.

In the suspension arm S23 of this modification, in the same manner as in the suspension arm S2 of the second embodiment, an intermediate product P2 is obtained by subjecting a pipe-shaped workpiece W2 to die-less processing (primary processing).

Thereafter, as shown in Fig. 22, the bracket portions 2 and 2 arranged at both ends of the intermediate product P2 are formed into an angular square shape in cross-section while being expanded by press working (secondary processing). Then, as shown in Fig. 12, bush mounting holes 21 and 21 are formed by press working (secondary processing). That is, bush mounting holes 21 and 21 are formed so as to penetrate opposing two side walls among surrounding four side walls of the square-finished bracket portions 2 and 2. Thus, the suspension arm S23 as a round shaped third modification is obtained.

In the suspension arm S23 of the round shaped third modification, the other structure is essentially the same as in that of the suspension arm S2 of the second embodiment, and therefore duplicate descriptions will be omitted by allotting the same reference numeral to the same or corresponding portion.

Also in this suspension arm S23 of the modification, the same functions and effects can be obtained in the same manner as in the aforementioned second embodiment.

Further, according to this suspension arm S23, the bracket portions 2 and 2 are formed into an angular pipe shape square in cross-section. Therefore, in the same manner as in the first embodiment, a bush can be mounted to the plane surface portion of the bracket portion 2 as a bush mounting portion, enabling more stable holding of the bush.

Also In the suspension arm S23 of this modification, the shape transitional portions 4 and 4 change smoothly and continuously in cross-sectional shape from the square bracket portions 2 and 2 to the circular intermediate shaft portion 3.

### <ROUND SHAPED FOURTH MODIFICATION>

Fig. 23 shows a suspension arm S24 as a link member for a vehicle which is a round shaped fourth modification of the present invention. As shown in this figure, the suspension arm S24 of this modification differs from the suspension arm S2 of the aforementioned second embodiment in that the bracket portions 2 and 2 arranged at both ends are finished into a square shape with the phase shifted from each other.

In the suspension arm S24 of this modification, in the same manner as in the second embodiment, after obtaining an intermediate product P2 by subjecting a pipe-shaped workpiece W2 to die-less processing (primary processing), the bracket portions 2 and 2 arranged at both ends of the intermediate product P2 are formed into a square shape while being extended by press working (secondary processing). At this time, the bracket portion 2 arranged at one side and the bracket portion 2 arranged at the other side are formed so as to be shifted in phase in the circumferential direction (direction around the axial direction) to thereby position the bracket portions 2 with the one side shifted in the circumferential direction with respect to the other bracket portion 2.

Thereafter, circular bush mounting holes 21 and 21 are formed in respective bracket portions 2 and 2 by press working (secondary processing) so as to penetrate opposing two side walls among four surrounding side walls of the bracket portions 2 and 2. Needless to say, in the suspension arm S24 of the modification, the axial directions of the bush mounting holes 21 and 21 arranged at both ends are arranged in a state shifted with each other in the circumferential direction.

In the suspension arm S24 of the round shaped fourth modification, the other structure is essentially the same as that of the second embodiment and the round shaped first modification, and therefore duplicate descriptions will be omitted by allotting the same reference numeral to the same or corresponding portion.

Also in this suspension arm S24 of the modification, the same functions and effects can be obtained in the same manner as in the aforementioned second embodiment.

Further, according to the suspension arm of this modification, the bush mounting directions of the bracket portions 2 and 2 as bush mounting portions can be adjusted arbitrarily, resulting in more enhanced versatility.

### <THIRD EMBODIMENT>

Fig. 24 shows a suspension arm S3 as a link member for a vehicle which is a third embodiment of the present invention. As shown in this figure, the suspension arm S3 of the third embodiment differs from the first and second embodiments in that the suspension arm S3 is produced by using upset forging processing (primary processing).

The suspension arm S3 of the third embodiment is formed to be essentially the same in final structure as the suspension arm S24 of the aforementioned round shaped third modification.

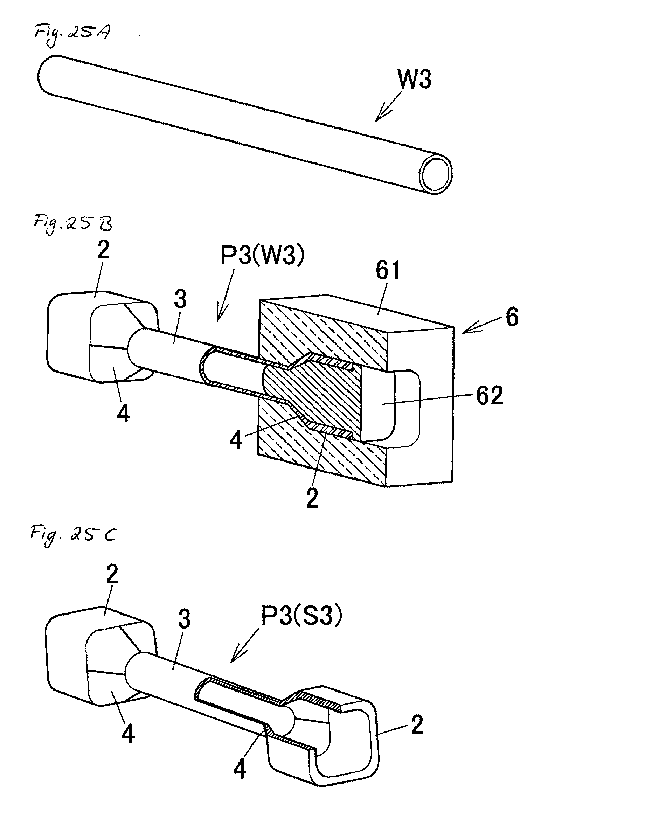

As shown in Fig. 25B, in the third embodiment, a die 6 for upset forging processing is prepared for forming bracket surrounding portions. The die is comprised of a female die 61 having an inner peripheral surface for defining outer peripheral surfaces of the bracket portion 2 and the shape transitional portion 4 and a male die 62 having an outer peripheral surface for defining inner peripheral surfaces of the bracket portion 2 and the shape transitional portion 4.

On the other hand, as shown in Fig. 25A, as a workpiece W3 for producing a suspension arm S3 of the third embodiment, an extruded product having a long slender round pipe shape corresponding to the outer diameter size of the intermediate shaft portion 3 is prepared.

Next, as shown in Fig. 25B, in a state in which the portions (both end portions) of the workpiece W3 corresponding to the bracket portions 2 and 2 are set in the female die 61, the male die 62 is driven into the female die 61. In this way, both end portions of the workpiece W3 are compressed in the axial direction to be deformed so as to be increased in diameter and thickness. Thus, an intermediate product P3 having bracket portions 2 square in cross-section at both ends and shape transitional portions 4 approximately circular in cross-section, as shown in Fig. 25C, is obtained.

Thereafter, in the intermediate product P3, bush mounting holes 21 and 21 are formed in bracket portions 2 and 2 by press working (secondary processing) so as to penetrate opposing two side walls among four surrounding side walls of the square shaped bracket portions 2 and 2.

Also in this suspension arm S3 of the third embodiment, the same functions and effects can be obtained in the same manner as in the aforementioned first and second embodiments.

Like the third embodiment, even in the case of deforming so as to increase the diameter and thickness by upset forging processing, in the same manner as in the aforementioned embodiment, it is possible to smoothly and continuously change the cross-section shape of the shape transitional portions 4 and 4 from the cross-sectional shape of the bracket portion 2 to the cross-sectional shape of the intermediate shaft portion 3.

Also in this third embodiment, by arranging the die 6 for forming the bracket portion arranged at one end and the die 6 for forming the bracket portion arranged at the other end with the phase shifted in a circumferential direction (axial direction), in the same manner as in the suspension arm S24 of the round shaped fourth modification shown in Fig. 23, one of the bracket portions 2 can be arranged in a shifted manner with respect to the other bracket portion 2.

### <OTHER MODIFICATIONS>

In the aforementioned embodiments and modifications, using die-less processing or upset forging processing as a primary processing, predetermined portions of a workpiece are deformed so as to be increased or decreased in diameter. The present invention, however, is not limited to them, and allows the use of bulge forming processing or hydroforming processing to increase or decrease the diameter.

Furthermore, the present invention allows the combined use of more than two processing methods including die-less processing, upset forging processing, bulge forming processing, and hydroforming processing to deform a predetermined portion of the workpiece so as to decrease or increase the diameter.

Additionally, in the present invention, each of the aforementioned embodiments and modifications thereof can be combined. For example, in the first embodiment and the first to fifth modification, a plurality of bracket portions can be disposed so as to be shifted in the circumferential direction, or both end portions after the die-less processing can be further enlarged with, e.g., press working.

Furthermore, in the second and third embodiments and the round shaped first to fourth modifications, at least one of the bracket portions can be formed into a yoke portion, through-holes or concave portions can be formed in the intermediate shaft portion, the intermediate shaft portion can be bent and deformed, or a bracket portion (intermediate large-diameter portion) such as a bush mounting portion can be formed at the intermediate shaft portion.

In the round shaped first to fifth modifications and the like, the intermediate shaft portion and the bracket portions are each formed into a square pipe shape, but the present invention is not limited to that, and allows the intermediate shaft portion to be formed into a square pipe shape or the bracket portion to be formed into a round pipe shape.

Also in the aforementioned embodiments and the like, the cross-sectional shape of each of the portions such as the bracket portion, the intermediate shaft portion and the shape transitional portion is formed into a circular shape or a rectangular shape, but the cross-sectional shape of the bracket portion or the intermediate shaft portion is not especially limited. For example, the cross-sectional shape of each portion can be formed into an oval shape, an ellipse shape, a triangular shape, or a polygonal shape have five sides, i.e., a pentagonal shape, or more sides, or even a variant shape. A variant cross-sectional shape is preferably used when the strength is required to be partially increased at any point in the circumferential direction.

In fact, in order to attain simplification and weight-reduction while securing the strength and durability, it is preferable to form the cross-sectional shape of each portion into a circular shape or a square shape.

Furthermore, in the aforementioned embodiments, the bracket portions are formed as a bush mounting portion or a yoke portion, but the present invention is not limited to them, and allow a bracket portion of any structure so long as it can connect another member.

Further, in the aforementioned embodiments and the like, press working is employed as the secondary processing for the bracket portion, but the present invention is not limited to that, and allows the use of other mechanical working such as cutting when subjecting the bracket portion to secondary processing.

Also, in the aforementioned embodiments and the like, the link member for a vehicle of the present invention was described by exemplifying cases in which the member is applied to a suspension arm, but the present invention is not limited to that. As long as it is a link member for a vehicle, the present invention can be applied to any members.

Also, in the aforementioned embodiments and the like, the plurality of bracket portions to be formed in each of suspension arms are the same in outer diameter and peripheral wall thickness, and also the same in cross-sectional shape. The present invention, however, is not limited to them, and allows the plurality of bracket portions in each of suspension arms to be formed so as to be different from each other in outer diameter size, peripheral wall thickness or cross-sectional shape.

Similarly, when a plurality of shape transitional portions or intermediate shaft portions are formed on each suspension arm, the cross-sectional shapes for the same type of portion can be formed to be different with each other.

Also, in the aforementioned embodiments and the like, a seamless tubular product made by extrusion is used as the workpiece W1, but the present invention is not limited to that, and allows the use of electric welded pipes constituted by a welded tube.

This application claims priority to Japanese Patent Application No. 2008-25130 filed on February 5, 2008, and the entire disclosure of which is incorporated herein by reference in its entirety.

It should be understood that the terms and expressions used herein are used for explanation and have no intention to be used to construe in a limited manner, do not eliminate any equivalents of features shown and mentioned herein, and allow various modifications falling within the claimed scope of the present invention.

While the present invention may be embodied in many different forms, a number of illustrative embodiments are described herein with the understanding that the present disclosure is to be considered as providing examples of the principles of the invention and such examples are not intended to limit the invention to preferred embodiments described herein and/or illustrated herein.

While illustrative embodiments of the invention have been described herein, the present invention is not limited to the various preferred embodiments described herein, but includes any and all embodiments having equivalent elements, modifications, omissions, combinations (e.g., of aspects across various embodiments), adaptations and/or alterations as would be appreciated by those in the art based on the present disclosure. The limitations in the claims are to be interpreted broadly based on the language employed in the claims and not limited to examples described in the present specification or during the prosecution of the application, which examples are to be construed as non-exclusive. For example, in the present disclosure, the term "preferably" is non-exclusive and means "preferably, but not limited to." In this disclosure and during the prosecution of this application, means-plus-function or step-plus-function limitations will only be employed where for a specific claim limitation all of the following conditions are present in that limitation: a) "means for" or "step for" is expressly recited; b) a corresponding function is expressly recited; and c) structure, material or acts that support that structure are not recited. In this disclosure and during the prosecution of this application, the terminology "present invention" or "invention" may be used as a reference to one or more aspect within the present disclosure. The language present invention or invention should not be improperly interpreted as an identification of criticality, should not be improperly interpreted as applying across all aspects or embodiments (i.e., it should be understood that the present invention has a number of aspects and embodiments), and should not be improperly interpreted as limiting the scope of the application or claims. In this disclosure and during the prosecution of this application, the terminology "embodiment" can be used to describe any aspect, feature, process or step, any combination thereof, and/or any portion thereof, etc. In some examples, various embodiments may include overlapping features. In this disclosure and during the prosecution of this case, the following abbreviated terminology may be employed: "e.g." which means "for example;" and "NB" which means "note well."

### INDUSTRIAL APPLICABILITY

The link member for a vehicle of the present invention can be applicable to a suspension arm for an automobile.

## Claims

1. A link member for a vehicle having bracket portions at both ends of the link member and an intermediate connecting portion connecting the bracket portions and arranged at an intermediate portion of the link member, wherein
the link member is constituted by an integrally formed product obtained by deforming a pipe-shaped workpiece by plastic working;
the intermediate connecting portion is provided with an intermediate shaft portion having a diameter smaller than that of the bracket portion; and
a peripheral wall of the bracket portion is formed to have a thickness different from that of a peripheral wall of the intermediate shaft portion.

2. The link member for a vehicle as recited in claim 1, wherein the peripheral wall of the bracket portion is larger in thickness than the peripheral wall of the intermediate shaft portion.

3. The link member for a vehicle as recited in claim 1 or 2, wherein as the plastic working, die-less processing for deforming a cross-sectional shape of the workpiece by applying tension or compressing force to the workpiece in an axial direction thereof is employed.

4. The link member for a vehicle as recited in claim 3, wherein the die-less processing is a method of deforming the workpiece so as to decrease or increase a diameter and a thickness of the workpiece by applying tension or compressing force to the workpiece in the axial direction thereof.

5. The link member for a vehicle as recited in claim 1 or 2, wherein as the plastic working, upset forging processing for deforming the workpiece to increase a diameter and a thickness of the workpiece by applying compressing force to the workpiece in an axial direction thereof is employed.

6. The link member for a vehicle as recited in any one of claims 1 to 5, wherein a shape transitional portion in which a cross-sectional shape smoothly changes from a cross-sectional shape of the bracket portion to a cross-sectional shape of the intermediate shaft portion is provided between the bracket portion and the intermediate shaft portion.

7. The link member for a vehicle as recited in claim 6, wherein the shape transitional portion is formed so that a diameter thereof changes smoothly.

8. The link member for a vehicle as recited in claim 6 or 7, wherein the shape transitional portion is formed so that a thickness of a peripheral wall thereof changes smoothly.

9. The link member for a vehicle as recited in any one of claims 1 to 8, wherein the intermediate connecting portion is provided with an intermediate large-diameter portion having a diameter larger than that of the intermediate shaft portion and a wall thickness of a peripheral wall different from that of the intermediate shaft portion.

10. The link member for a vehicle as recited in any one of claims 1 to 9, wherein the link member is made of aluminum or aluminum alloy.

11. The link member for a vehicle as recited in any one of claims 1 to 10, wherein the workpiece is an extruded product.

12. The link member for a vehicle as recited in any one of claims 1 to 11, wherein at least one of the bracket portions arranged at both ends is provided with a bush mounting hole for mounting a bush, and constitutes a bush mounting portion.

13. The link member for a vehicle as recited in any one of claims 1 to 12, wherein at least one of the bracket portions arranged at both ends constitutes a yoke portion having shaft supporting side walls.

14. The link member for a vehicle as recited in any one of claims 1 to 13, wherein the intermediate shaft portion is provided with a through-hole.

15. A suspension arm constituted by the link member for a vehicle as recited in any one of claims 1 to 14.

16. A method of manufacturing a link member for a vehicle having bracket portions at both ends of the link member and an intermediate connecting portion connecting the bracket portions and arranged at an intermediate portion of the link member, wherein
a pipe-shaped workpiece is deformed by plastic working to thereby manufacture the link member for a vehicle in which an intermediate connecting portion is provided with an intermediate shaft portion having a diameter smaller than that of the bracket portion, a peripheral wall of the bracket portion is formed to have a thickness different from that of a peripheral wall of the intermediate shaft portion, and the link member is constituted by an integrally formed product.

17. A method of manufacturing a suspension arm for an automobile having bracket portions at both ends of the suspension member and an intermediate connecting portion connecting the bracket portions and arranged at an intermediate portion of the suspension member, wherein
a pipe-shaped workpiece is deformed by plastic working to thereby manufacture the suspension arm for an automobile in which an intermediate connecting portion is provided with an intermediate shaft portion having a diameter smaller than that of the bracket portion, a peripheral wall of the bracket portion is formed to have a thickness different from that of a peripheral wall of the intermediate shaft portion, and the link member is constituted by an integrally formed product.
